(19) Europäisches Patentamt
European Patent Office
Office européen des brevets

(11) Publication number: **0 100 115 B1**

(12) **EUROPEAN PATENT SPECIFICATION**

(45) Date of publication of patent specification: **18.06.86**

(51) Int. Cl.[4]: **C 01 B 33/28,** B 01 J 29/20, C 10 G 45/64

(21) Application number: **83201009.4**

(22) Date of filing: **05.07.83**

# (54) Composite crystalline alumium silicates and their use in a process for dewaxing hydrocarbon oils.

(30) Priority: **26.07.82 NL 8202992**

(43) Date of publication of application: **08.02.84 Bulletin 84/06**

(45) Publication of the grant of the patent: **18.06.86 Bulletin 86/25**

(84) Designated Contracting States: **BE CH DE FR GB IT LI SE**

(56) References cited:
**EP-A-0 012 473**
**DE-A-2 817 577**
**FR-A-2 130 429**

**ZEITSCHRIFT FÜR CHEMIE, vol. 13, no. 3, 1974, pages 109-110, Leipzig, DD. F. WOLF et al.: "Über den Einfluss organischer Verbindungen auf die hydrothermale Synthese zeolithischer Molekularsiebe der Typen A, X und Y"**

(73) Proprietor: **SHELL INTERNATIONALE RESEARCH MAATSCHAPPIJ B.V.
Carel van Bylandtlaan 30
NL-2596 HR Den Haag (NL)**

(72) Inventor: **van Erp, Willibrord Adelbert
Badhuisweg 3
NL-1031 CM Amsterdam (NL)**
Inventor: **van de Griend, Jacob Adrianus
Badhuisweg 3
NL-1031 CM Amsterdam (NL)**
Inventor: **Maxwell, Ian Ernest
Badhuisweg 3
NL-1031 CM Amsterdam (NL)**
Inventor: **Nanne, Johannes Martinus
Badhuisweg 3
NL-1031 CM Amsterdam (NL)**

(74) Representative: **Aalbers, Onno et al
P.O. Box 302
NL-2501 CH The Hague (NL)**

**EP 0 100 115 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to composite crystalline aluminium silicates and to their use in the catalytic dewaxing of hydrocarbon oils.

Unbranched paraffins present in hydrocarbon oils, such as lubricating oils, have a high melting point and upon cooling of the oils they separate as solids. It is accepted practice in order to avoid problems during storage and transport and when using these oils at a low temperature, to remove the unbranched paraffins from the oils. This removal may be carried out by cooling the oil so that the wax separates as solids and can be removed from the oil by filtration. The usual procedure is to carry out the cooling in the presence of a mixture of two solvents, in particular a mixture of methyl ethyl ketone and toluene. One solvent (toluene) ensures adequate flow at a low temperature, while the other solvent (methyl ethyl ketone) acts as a precipitant for the wax. This so-called solvent dewaxing comprises a number of steps, viz. mixing of the wax-containing oil with the solvents and heating of the mixture in order to bring about complete dissolution, chilling of the mixture to the filtering temperature, filtration of the cooled mixture, washing of the separated wax with cooled solvent and recovery of the solvents from the dewaxed oil and from the separated wax by filtration and recirculation of the solvents into the process. Solvent dewaxing is an extremely costly process which consumes a great deal of energy. The preparation of oils with a very low pour point by way of solvent dewaxing is very difficult to realise technically and usually the yields of dewaxed oil are very low. In view of these drawbacks searches have been made in the past for other methods of removing unbranched paraffins from hydrocarbon oils. A suitable method is the selective hydrocracking of unbranched paraffins. To this end the oil to be dewaxed is contacted at an elevated temperature together with hydrogen, with a catalyst the pores of which are accessible to unbranched paraffins but substantially inaccessible to other hydrocarbons. Hydrocracking is used to convert the unbranched paraffins into light hydrocarbons which can be removed from the hydrocarbon oil in a simple manner by means of distillation. Since usually the hydrocracking is not fully selective, the cracking of unbranched paraffins will be accompanied with some cracking of single branched paraffins. As a consequence, when the catalytic route is used, the yield of dewaxed oil will often be somewhat smaller than when solvent dewaxing is used. And also, the catalytic route will usually yield a dewaxed oil which has a somewhat lower viscosity index (VI) than that obtained in solvent dewaxing. However, this possible loss of yield and VI is amply compensated for by the much lower cost of the catalytic route. The quantities often used in order to allow the catalytic dewaxing and the solvent dewaxing to be examined in relation to one another are "Δ yield" and "Δ VI", which should be taken to be the differences between the respective yields and VI's using catalytic and solvent dewaxing, both carried out with the object of preparing oils having the same low pour point. (As stated hereinbefore, these Δ's will often have a negative value).

Various compositions have been proposed in the past as catalysts suitable for the present purpose. In many cases the catalysts proposed belong to the class of the crystalline aluminium silicates.

Crystalline aluminium silicates, which can be distinguished from one another by certain characteristic lines occurring in their X-ray powder diffraction patterns, can be prepared in a simple manner starting from an aqueous mixture which comprises the following compounds: one or more silicon compounds, one or more aluminium compounds, one or more alkali metal hydroxides and optionally one or more organic nitrogen compounds as well as optionally one or more alkali metal salts of mineral acids. The preparation is usually carried out by maintaining the mixture at an elevated temperature with stirring until the crystalline silicate has formed and subsequently separating the silicate from the mother liquor, washing, drying and calcining. It is essential to make the right selection of the reaction components comprised in the aqueous mixture and their molar ratios, the reaction conditions, such as the temperature and the right choice as to whether or not to introduce mechanical energy by stirring or in any other way, in order to prepare composite crystalline aluminium silicates according to the present invention. In order to be eligible for use on a technical scale, the composite crystalline aluminium silicates should have a high activity, a high selectivity and a high stability. For determining the selectivity in the catalytic dewaxing of lubricating oils, the afore-mentioned quantities Δ yield and Δ VI may very suitably be used.

A number of crystalline aluminium silicates were synthesized and tested as part of an investigation concerning catalysts for the dewaxing of hydrocarbon oils. Two of said crystalline aluminium silicates — which, for the sake of brevity, will hereinafter be referred to as "silicate 1" and "silicate 2" — were subjected to further scrutiny on account of their interesting properties regarding the present purpose.

Silicate 1 was prepared starting from a base mixture obtained by adding to water the following compounds: amorphous silica, sodium aluminate, sodium hydroxide and tetrapropylammonium hydroxide in such quantities that the base mixture had the following molar composition

$$25\ SiO_2.\ 0.33\ Al_2O_3.\ 1\ Na_2O.\ 3(C_2H_7)_4NOH.\ 450\ H_2O.$$

Silicate 1 was prepared by maintaining the base mixture at 150°C for 24 hours, with stirring and under autogeneous pressure.

Silicate 2 was prepared starting from a base mixture obtained by adding to water the following compounds: water glass, aluminium sulphate, sulphuric acid and piperidine in such quantities that the base mixture had the following molar composition:

$60\ SiO_2.\ 1Al_2O_3.\ 5.7\ Na_2O.\ 11.6\ Na_2SO_4.\ 36.7\ C_6H_{11}N.\ 1938\ H_2O.$

Silicate 2 was prepared by maintaining the base mixture, without mechanical energy being introduced, at 150°C for 113 hours and under autogeneous pressure.

Although silicates 1 and 2, which, on account of the characteristic lines of their X-ray powder diffraction patterns clearly were different compounds, proved to have interesting properties when used as catalysts for dewaxing a given lubricating oil (for the sake of brevity hereinafter referred to as lubricating oil I), their performance was insufficiently satisfactory to render them eligible for use on a technical scale. An attractive property of silicate 1 was its very high stability. However, the use of silicate 1 was accompanied with too negative values of Δ yield and Δ VI. An attractive property of silicate 2 was the fact that the use of this silicate was accompanied with a value Δ VI = 0. However, silicate 2 had a very low stability, while the use of this silicate was accompanied with too negative a Δ yield, as was the case with silicate 1. Attempts at attaining a catalyst with acceptable properties by mixing the two silicates failed. Contrary to the expectation that mixing the two silicates would lead to the formation of a composition whose catalytic properties stand halfway between those of the two mixing components, what was actually found was totally different. A mixture of the two silicates in a weight ratio of 1:1, which mixture had an X-ray powder diffraction pattern in which naturally the characteristic lines both of silicate 1 and of silicate 2 were present, when used as catalyst for dewaxing lubricating oil I, displayed the following behaviour. The mixture showed a stability which, although somewhat lower than that of silicate 1, was much higher than that of silicate 2. The use of the mixture was accompanied with a Δ yield which was considerably less negative than that occurring with the use of either silicate 1 or silicate 2. However, the use of the mixture was accompanied with a very negative Δ VI, which Δ VI was much bigger than that observed when silicate 1 was used. Considering the unexpected unattractive catalytic behaviour of the coarse physical mixture of silicates 1 and 2, attempts were made to bring about a very intimate mixing of the two silicates by synthesizing them both from one base mixture. Surprisingly, with the aid of a larger number of experiments it was determined that it is indeed possible, starting from one base mixture, to prepare a composite crystalline aluminium silicate the X-ray powder diffraction pattern of which, like that of the coarse physical mixture, includes the characteristic lines of both silicate 1 and silicate 2, and which composite crystalline aluminium silicate is a very attractive dewaxing catalyst.

The present invention therefore relates to a composite crystalline aluminium silicate, which has been prepared by starting from an aqueous mixture comprising one or more silicon compounds, one or more aluminium compounds, one or more alkali metal hydroxides (MOH), one or more alkali metal salts of mineral acids ($M_nX$) and a pyridine (RN), in which mixture the various components occur in the following molar ratios:

$SiO_2 : MOH = 5.2—7.8$
$SiO_2 : M_nX < 10$
$SiO_2 : Al_2O_3 = 60—250$
$SiO_2 : RN = 2.2—2.8$ and
$H_2O : SiO_2 = 5—65,$

maintaining the mixture, without mechanical energy being introduced, at a temperature between 100 and 200°C until the crystalline silicate has formed and subsequently separating the silicate from the mother liquor.

For the sake of brevity said composite crystalline aluminium silicate will hereinafter be referred to as "silicate 3".

The preparation of silicate 3 is extremely critical as to the molar ratios in which the various components occur in the base mixture. If only one item of the above-mentioned ratios is changed, this will lead to the formation of a product totally different from the desired silicate 3, as may be seen from the following list which, in addition to the differently chosen molar ratios, gives the resulting products as well:

1. $SiO_2/MOH > 7.8 \rightarrow$ a mixture of silicate 2 and amorphous material.
2. $SiO_2/MOH < 5.2 \rightarrow$ a mixture of silicate 2 and a crystalline sodium silicate, for the sake of brevity hereinafter referred to as "silicate 4".
3. $SiO_2/Al_2O_3 > 250 \rightarrow$ a mixture of silicate 4 and amorphous material.
4. $SiO_2/Al_2O_3 < 60 \rightarrow$ silicate 2.
5. $SiO_2/RN > 2.8 \rightarrow$ a mixture of silicate 1, silicate 4 and amorphous material.
6. $SiO_2/RN < 2.2 \rightarrow$ a mixture of silicate 2, silicate 4 and amorphous material.
7. No $NaX \rightarrow$ amorphous material.

Preferably, silicate 3 is prepared by starting from an aqueous mixture in which the various components occur in the following molar ratios:

$SiO_2 : MOH = 5.6—7.0,$
$SiO_2 : M_nX < 8,$
$SiO_2 : Al_2O_3 = 80—200,$
$SiO_2 : RN = 2.2—2.8,$ and
$H_2O : SiO_2 = 8—50.$

During the preparation of silicate 3 no mechanical energy must be introduced into the mixture by stirring or in any other way, since it has been found that stirring leads to the formation, from a base mixture comprising the various components in the right ratios, of silicate 1 instead of silicate 3.

Surprisingly it was found that, in contrast to silicates 1 and 2 and the coarse physical mixture of silicates 1 and 2, silicate 3 displayed excellent behaviour when used as a catalyst for dewaxing lubricating oil I. Silicate 3 had a very high stability, even higher than that of silicate 1. When silicate 3 was used on lubricating oil I, the Δ yield and Δ VI observed were only very slightly negative.

In addition to its use as a catalyst in the dewaxing of lubricating oils in order to reduce the pour point, silicate 3 has proved to be excellently suitable for the catalytic dewaxing of other hydrocarbons, such as transformer oils, in order to reduce the pour point, and kerosines and gas oils in order to reduce the freezing point.

The present invention therefore also relates to a process for the catalytic dewaxing of hydrocarbon oils, wherein the catalyst used is a composite crystalline aluminium silicate prepared in the manner described hereinbefore.

In the preparation of the silicates according to the invention, the starting material should be an aqueous mixture comprising one or more silicon compounds, one or more aluminium compounds, one or more alkali metal hydroxides, one or more alkali metal salts of mineral acids and a pyridine. Suitable silicon compounds include water glass and amorphous silica. Suitable aluminium compounds include aluminium sulphate and sodium aluminate. Suitable alkali metal salts of mineral acids include sulphates, nitrates and phosphates. The alkali metal compounds preferably used are sodium compounds. Pyridine and/or one or more alkylpyridines are suitably used. The alkyl-groups present in the alkylpyridines preferably comprise from 1—4 carbon atoms. The silicates according to the invention are prepared from a aqueous mixture which, among other things, contains at least one alkali metal hydroxide and at least one alkali metal salt of a mineral acid. This does not mean, however, that these compounds must necessarily be added to the aqueous mixture in that form. They may also be formed from the other reaction components, for instance from water glass and sulphuric acid. Very suitable base mixtures for the preparation of the present silicates may be composed either by the addition to water of water glass, aluminium sulphate, sulphuric acid and pyridine, or by the addition to water or amorphous silica, sodium aluminate, sodium hydroxide, pyridine and sodium sulphate or sodium nitrate.

The silicates prepared in the manner described hereinbefore contain alkali metal. If the silicates are to be used as catalysts in the catalytic dewaxing of hydrocarbon oils, their alkali metal content should preferably firstly be reduced to less than 0.1% w and in particular to less than 0.01% w. The reduction of the alkali metal content of the silicates may very suitably be carried out by contacting the silicates once or several times with an aqueous solution which includes ammonium ions. From the $NH_4^+$ silicates obtained in this way the $H^+$ silicates can be prepared by calcination. The silicates prepared in the manner described hereinbefore are excellently suitable as catalysts for dewaxing hydrocarbon oils. If desired, their performance in this use can be further improved by depositing one or more catalytically active metals on them. The metals may be deposited on the silicates in the conventional way, for instance by impregnation, percolation or ion exchange. When the silicates are used as catalysts they should generally be available in the form of particles with a diamter of 0.5—5 mm. In the mode of preparation described hereinbefore the silicates are obtained in the form of a fine powder. The silicates may be shaped to form particles of a larger size, for instance by pressing. During shaping the silicates may be combined with a binder material, such as koalin or bentonite. Preferably a binder material is used which contains no or only very little alkali metal.

The conventional solvent dewaxing yields a solid wax mixture as a by-product, in addition to a hydrocarbon oil having a reduced wax content as the main product. This by-product is suitable for a variety of purposes. For instance it may be used to prepare a first-class lubricating oil by catalytic hydrotreatment. If the solvent dewaxing forms part of a process for preparing lubricating oil in which the conventional removal of aromatic components by extraction with a solvent selective to aromatics, such as furfural, is partly or wholly replaced by a catalytic hydrotreatment, the separated solid wax can very suitably be recirculated to the catalytic hydrotreatment in order to raise the yield of lubricating oil.

In contrast to the conventional solvent dewaxing which as a valuable by-product yields a solid wax mixture which can be converted into a first-class lubricating oil in the way described hereinbefore, the process according to the invention yields a mixture of light hydrocarbons as a by-product. Although the process according to the invention may in principle be applied to any lubricating oil in order to prepare a product with the desired low pour point, it is preferred, in view of the afore-mentioned conversion of the wax into light hydrocarbons, to use the process only in the cases where in order to achieve the desired low pour point not more than 10% w of wax, calculated on oil to be dewaxed, has to be removed from the oil. This means that in order to prepare a lubricating oil with a very low pour point — for instance of −40°C — starting from a lubricating oil with a very high pour point — for instance of +50°C — the process according to the invention is preferably used in combination with a solvent dewaxing in which the lubricating oil to be dewaxed is subjected in the first step to a solvent dewaxing in order to reduce the pour point to, say, −15°C and subsequently in a second step to the process according to the invention for the preparation of the oil having the desired low pour point. Naturally, as was described hereinbefore, the wax separated in the first step of the two-step process is suitable for conversion into a lubricating oil by catalytic hydrotreatment,

optionally by recirculation of the wax to a catalytic hydrotreatment carried out prior to the solvent dewaxing.

The lubricating oils to which the process according to the invention is applied may be either distillate or residual lubricating oils. They may have been prepared either in the conventional way by aromatics extraction or by a catalytic hydrotreatment. The process according to the invention has also proved very suitable for reducing the pour point of hydrocarbon oils other than lubricating oils, such as transformer oils and for reducing the freezing point of kerosines and gas oils.

The process according to the invention is also suitable to be used for improving the octane number of motor gasolines which contain unbranched paraffines. Unbranched paraffines are known to have a low octane number and therefore to have an unfavourable effect on the octane number of gasolines in which they occur. When the process according to the invention is applied to the gasolines, the unbranched paraffines will be removed and the octane number will rise.

The process according to the invention may very suitably be carried out at a temperature of from 250—500°C, a hydrogen pressure of from 5—100 bar, a space velocity of from 0.1—5.0 $kg.1^{-1}.h^{-1}$ and a hydrogen/oil ratio of from 100—2500 $N1.kg^{-1}$. The process is preferably carried out at a temperature of from 275—450°C, a hydrogen pressure of from 10—75 bar, a space velocity of from 0.3—3 $kg.1^{-1}.h^{-1}$ and a hydrogen/oil ratio of from 200—2000 $N1.kg^{-1}$. The invention is now elucidated with the aid of the following example.

Example

*Experiments with silicate preparation*

In Experiment 1 a silicate 1 was prepared starting from a base mixture which had been composed by adding to water the following compounds: amorphous silica, sodium aluminate, sodium hydroxide and tetrapropylammonium hydroxide in such quantities that the base mixture had the following molar composition:

$$25\ SiO_2.\ 0.33\ Al_2O_3.\ 1\ Na_2O.\ 3(C_3H_7)_4NOH.\ 450\ H_2O.$$

Silicate 1 was prepared by maintaining the base mixture at 150°C for 24 hours with stirring in an autoclave under autogeneous pressure.

In experiment 2 a silicate 2 was prepared starting from a base mixture which had been composed by adding to water the following compounds: water glass, aluminium sulphate, sulphuric acid and piperidine in such quantities that the base mixture had the following molar composition:

$$60\ SiO_2.\ 1\ Al_2O_3.\ 5.7\ Na_2O.\ 11.6\ Na_2SO_4.\ 36.7\ C_6H_{11}N.\ 1938\ H_2O.$$

Silicate 2 was prepared by maintaining the base mixture at 150°C for 113 hours, without mechanical energy being introduced, in an autoclave under autogeneous pressure. After cooling of the reaction mixtures silicates 1 and 2 were filtered off, washed with water until the pH of the wash water was about 8, dried at 120°C and calcined at 500°C for one hour.

Eleven experiments (Experiments 3—13) were carried out starting from base mixtures which had been composed by adding to water the following compounds: water glass, aluminium sulphate, sulphuric acid and pyridine.

An Experiment 14 was carried out starting from a base mixture which had been composed by adding to water the following compounds: amorphous silica, sodium aluminate, sodium hydroxide, sodium sulphate and pyridine.

Two experiments (Experiments 15 and 16) were carried out starting from base mixtures which had been composed in a way substantially analagous to that of Experiment 14, the difference being that in Experiment 15 the compound $M_nX$ used was sodium nitrate instead of sodium sulphate and that in Experiment 16 the addition of a compound $M_nX$ to the mixture was omitted.

In Experiments 3—16 the base mixtures were maintained at 150°C for 120 hours in an autoclave under autogeneous pressure. With the exception of Experiment 4, in which the mixture was stirred during heating, no mechanical energy was supplied to the mixtures. After cooling of the reaction mixtures the solid products were filtered off, washed with water until the pH of the wash water was about 8, dried at 120°C and calcined in air at 500°C for one hour. The composition of the products obtained was determined by their X-ray powder diffraction patterns. The molar ratios of the components comprised in the base mixtures and a description of the products are given in Table A. Of the experiments given in Table A only Experiments 3, 8, 11, 13, 14 and 15 relate to the preparation of a silicate 3 according to the invention. The other experiments fall outside the scope of the invention. They have been included in the description for comparison.

From silicates 1, 2 and 3 prepared according to Experiments 1, 2 and 3, silicates 1′, 2′ and 3′, respectively, were prepared by boiling with a 1.0 molar $NH_4NO_3$ solution, washing with water, boiling again with a 1.0 molar $NH_4NO_3$ solution and washing, drying at 120°C and calcination at 500°C. In addition a silicate mixture A was prepared by mixing equal quantities by weight of silicates 1′ and 2.′

Silicates 1′, 2′ and 3′ as well as silicate mixture A were tested for the catalytic dewaxing of hydrocarbon oils.

*Dewaxing experiments*

All the experiments were carried out at a pressure of 40 bar in a reactor containing a fixed bed of the catalyst concerned.

In Experiments 17—20 silicates 1′, 2′ and 3′ as well as silicate mixture A were used for the catalytic dewaxing of a spindle waxy distillate (feed I).

In Experiments 21—33 silicate 3′ was used for the catalytic dewaxing of an XHVI waxy raffinate (feed II), a partly dewaxed XHVI raffinate (feed III) prepared by solvent dewaxing of feed II, a transformer oil (feed IV), a spindle waxy raffinate (feed V) and a spindle waxy hydroraffinate (feed VI).

The conditions under which these experiments were carried out and the results obtained are given in Table B. The values for pour point of product, Δ yield and Δ VI given in Table B relate to the product obtained after material which has formed and which boils below the initial boiling point of the feed has been removed. The values of Δ yield and Δ VI indicate the differences between the respective yields and VI's obtained using the process according to the invention and using the conventional solvent dewaxing in order to prepare products having the same low pour point.

In Experiments 34—38 silicate 3′ was used for the catalytic dewaxing of two kerosines (feeds VII and VIII). Experiments 34—38 were carried out at a space velocity of 1.0 $kg.1^{-1}.h^{-1}$ and a hydrogen/oil ratio of 500 $N1.kg^{-1}$.

The average temperatures at which Experiments 34—38 were carried out and the results obtained are given in Table C.

TABLE A

| Experiment No. | Molar ratios of components in the base mixture | | | | | Description of the solid product based on X-ray powder diffraction pattern. |
|---|---|---|---|---|---|---|
| | $SiO_2/NaOH$ | $SiO_2/Na_2SO_4$ or $SiO_2/NaNO_3$ | $SiO_2/Al_2O_3$ | $SiO_2$/Pyridine | $H_2O/SiO_2$ | |
| 3 | 6.3 | 4.8 | 94 | 2.6 | 21 | silicate 3 |
| 4 | 6.3 | 4.8 | 94 | 2.6 | 21 | silicate 1 |
| 5 | 9.4 | 4.3 | 94 | 2.6 | 21 | silicate 2 + amorphous material |
| 6 | 4.7 | 5.5 | 94 | 2.6 | 21 | silicate 2 + silicate 4 |
| 7 | 6.3 | 4.8 | 376 | 2.6 | 21 | silicate 4 + amorphous material |
| 8 | 6.3 | 4.8 | 188 | 2.6 | 21 | silicate 3 |
| 9 | 6.3 | 4.8 | 47 | 2.6 | 21 | silicate 2 |
| 10 | 6.3 | 4.8 | 94 | 2.9 | 21 | silicate 1 + silicate 4 + amorphous material |
| 11 | 6.3 | 4.8 | 94 | 2.3 | 21 | silicate 3 |
| 12 | 6.3 | 4.8 | 94 | 2.1 | 21 | silicate 2 + silicate 4 + amorphous material |
| 13 | 6.3 | 4.8 | 94 | 2.6 | 11 | silicate 3 |
| 14 | 6.3 | 4.8 | 94 | 2.6 | 21 | silicate 3 |
| 15 | 6.3 | 2.4 | 94 | 2.6 | 21 | silicate 3 |
| 16 | 6.3 | — | 94 | 2.6 | 21 | amorphous material |

TABLE B

| Exp. No. | Cat. No. | Feed No. | Reaction conditions: Average temperature, °C | Reaction conditions: Space velocity $kg.l^{-1}.h^{-1}$ | Reaction conditions: Hydrogen/oil ratio $Nl.kg^{-1}$ | Pour point feed, °C | Pour point product, °C | Δ yield, %w | Δ VI | Deactivation-rate, °C/100 h |
|---|---|---|---|---|---|---|---|---|---|---|
| 17 | 1′ | I | 290 | 2.0 | 250 | +18 | −20 | − 7 | − 7 | 7 |
| 18 | 2′ | I | 350 | 2.0 | 250 | +18 | − 2 | − 8 | 0 | 206 |
| 19 | A | I | 300 | 2.0 | 250 | +18 | −22 | − 4 | −12 | 10 |
| 20 | 3′ | I | 345 | 2.0 | 250 | +18 | −19 | − 1 | − 2 | 6 |
| 21 | 3′ | II | 369 | 0.5 | 500 | +50 | +14 | −14 | − 4.5 | 2 |
| 22 | 3′ | II | 381 | 0.5 | 500 | +50 | − 0.6 | −12 | −13 | 2 |
| 23 | 3′ | III | 390 | 0.7 | 380 | −16 | −35 | +12 | − 5 | 2 |
| 24 | 3′ | III | 390 | 0.5 | 1100 | −16 | −41 | +20 | 0 | 2 |
| 25 | 3′ | IV | 339 | 1.1 | 260 | −17 | −44 | − 3 | — | 2 |
| 26 | 3′ | IV | 350 | 1.1 | 260 | −17 | −47 | − 5 | — | 2 |
| 27 | 3′ | IV | 375 | 1.1 | 260 | −17 | −50 | −10 | — | 2 |
| 28 | 3′ | V | 363 | 1.0 | 280 | +27 | + 1.6 | − 5 | − 4 | 5 |
| 29 | 3′ | V | 379 | 1.0 | 280 | +27 | − 5.5 | − 6 | − 4 | 5 |
| 30 | 3′ | V | 366 | 0.5 | 510 | +27 | −16.2 | − 6 | − 4 | 5 |
| 31 | 3′ | VI | 363 | 0.5 | 520 | +36 | − 2.8 | 0 | − 6 | 5 |
| 32 | 3′ | VI | 379 | 0.5 | 520 | +36 | −12.6 | 0 | − 7 | 5 |
| 33 | 3′ | VI | 390 | 0.4 | 640 | +36 | −22.5 | 0 | − 9 | 5 |

TABLE C

| Exp. No. | Feed No. | Average temp., °C | Freezing point feed, °C | Freezing point product, °C | Yield %w | Deactivation rate, °C/100 h |
|---|---|---|---|---|---|---|
| 34 | VII | 291 | −40.5 | −52.5 | 91.3 | 2.0 |
| 35 | VII | 303 | −40.5 | −61.0 | 86.8 | 2.0 |
| 36 | VIII | 296 | −29.5 | −49.0 | 90.9 | 1.6 |
| 37 | VIII | 312 | −29.5 | −58.5 | 88.1 | 1.6 |
| 38 | VIII | 319 | −29.5 | −67.0 | 86.7 | 1.6 |

The following remarks may be made on Tables A—C.

Table A

The results of Experiments 3—16 clearly show that the preparation of silicate 3 is extremely critical as regards the molar ratios in which the various components occur in the base mixture and as to whether or not mechanical energy is supplied to the mixture during the preparation of the silicate.

Table B

Comparison of the results of Experiments 17—20 shows that for the catalytic dewaxing of lubricating oils silicate 3 is superior to silicates 1 and 2 as well as to the coarse physical mixture of 1 and 2. The results of Experiments 20—24 and 28—33 show that silicate 3 can be successfully used for the catalytic dewaxing of both lubricating oil distillates and lubricating oil raffinates, which raffinates may have been prepared either via the conventional aromatics extraction route or by hydrorefinery. What is remarkable is the high positive value of Δ yield in Experiments 23 and 24, in which silicate 3 was used on a lubricating oil from which part of the wax had been removed previously by solvent dewaxing. For Experiments 25—27 no VI's are given, since with transformer oils a change in VI is irrelevant.

Table C

The results of Experiments 34—38 show that silicate 3 is also very suitable for catalytically dewaxing kerosines in order to reduce the freezing point.

**Claims**

1. Composite crystalline aluminium silicate, which has been prepared by starting from an aqueous mixture comprising one or more silicon compounds, one or more aluminium compounds, one or more alkali metal hydroxides (MOH), one or more alkali metal salts of mineral acids ($M_nX$) and a pyridine (RN), in which mixture the various components occur in the following molar ratios:

$SiO_2 : MOH = 5.2—7.8$,
$SiO_2 : M_nX < 10$,
$SiO_2 : Al_2O_3 = 60—250$,
$SiO_2 : RN = 2.2—2.8$, and
$H_2O : SiO_2 = 5—65$,

maintaining the mixture, without mechanical energy being introduced, at a temperature between 100 and 200°C until the crystalline silicate has formed and subsequently separating the silicate from the mother liquor.

2. Composite crystalline aluminium silicate as claimed in claim 1, which has been prepared by starting from an aqueous mixture in which the various components occur in the following molar ratios:

$SiO_2 : MOH = 5.6—7.0$,
$SiO_2 : M_nX < 8$,
$SiO_2 : Al_2O_3 = 80—200$,
$SiO_2 : RN = 2.2—2.8$, and
$H_2O : SiO_2 = 8—50$.

3. Composite crystalline aluminium silicate as claimed in claim 1 or 2, which has been prepared by starting from an aqueous mixture comprising sodium hydroxide as an alkali metal hydroxide and a sodium salt as an alkali metal salt of a mineral acid.

4. Composite crystalline aluminium silicate as claimed in any of claims 1—3, which has been prepared starting from an aqueous mixture composed by adding water glass, aluminium sulphate, sulphuric acid and pyridine to water.

5. Composite crystalline aluminium silicate as claimed in any of claims 1—3, which has been prepared starting from an aqueous mixture composed by adding to water amorphous silica, sodium aluminate, sodium hydroxide, pyridine and either sodium sulphate or sodium nitrate.

6. Composite crystalline aluminium silicate as claimed in any of claims 1—5, in which the alkali metal content has been reduced to less than 0.1% w.

7. A process for the catalytic dewaxing of hydrocarbon oils, wherein the catalyst used is a composite crystalline aluminium silicate as claimed in any of claims 1—6.

8. A process as claimed in claim 7, wherein the hydrocarbon oil to be dewaxed has been chosen from the group formed by lubricating oils, transformer oils, kerosines and gas oils.

9. A process as claimed in claim 7 or 8, wherein not more than 10% w of wax is removed from the hydrocarbon oil to be dewaxed.

10. A process as claimed in any of claims 7—9, which is used on a hydrocarbon oil from which part of the wax has already been removed by solvent dewaxing.

11. A process as claimed in any of claims 7—10, which is carried out at a temperature of from 250—500°C, a hydrogen pressure of from 5—100 bar, a space velocity of from 0.1—5.0 $kg.1^{-1}.h^{-1}$ and a hydrogen/oil ratio of from 100—2500 $N1.kg^{-1}$

12. A process as claimed in claim 11, which is carried out at a temperature of from 275—450°C, a hydrogen pressure of from 10—75 bar, a space velocity of from 0.3—3 $kg.1^{-1}.h^{-1}$ and a hydrogen/oil ratio of from 200—2500 $N1.kg^{-1}$.

13. Hydrocarbon oils which have been dewaxed according to a process as claimed in claim 7.

**Revendications**

1. Silicate d'aluminium cristallin composite, qui a été préparé par agitation à partir d'un mélange aqueux comprenant un ou plusieurs composés du silicium, un ou plusieurs composés de l'aluminium, un ou plusieurs hydroxydes de métaux alcalins (MOH), un ou plusieurs sels de métaux alcalins d'acides minéraux ($M_nX$) et une pyridine (RN), mélange dans lequel les divers constituants sont présents dans les rapports molaires suivants:

$SiO_2 : MOH$ 5,2—7,8
$SiO_2 : M_nX < 10$
$SiO_2 : Al_2O_3$ = 60—250
$SiO_2 : RN$ = 2,2—2,8 et
$H_2O : SiO_2$ = 5—65,

en maintenant le mélange, sans introduction d'énergie mécanique, à une température comprise entre 100 et 200°C jusqu'à ce que le silicate cristallin soit formé et en séparant ensuite le silicate de la liqueur-mère.

2. Silicate d'aluminium cristallin composite selon la revendication 1, qui a été préparé à partir d'un mélange aqueux dans lequel les divers constituants sont présents dans les rapports molaires suivants:

$SiO_2 : MOH$ = 5,6—7,0
$SiO_2 : M_nX < 8$
$SiO_2 : Al_2O_3$ = 80—200
$SiO_2 : RN$ = 2,2—2,8 et
$H_2O : SiO_2$ = 8—50.

3. Silicate d'aluminium cristallin composite selon la revendication 1 ou 2, qui a été préparé à partir d'un mélange aqueux comprenant de l'hydroxyde de sodium comme hydroxyde de métal alcalin et un sel de sodium comme sel de métal alcalin d'un acide minéral.

4. Silicate d'aluminium cristallin composite selon l'une quelconque des revendications 1—3, qui a été préparé à partir d'un mélange aqueux composé en ajoutant du verre soluble, du sulfate d'aluminium, de l'acide sulfurique et de la pyridine à de l'eau.

5. Silicate d'aluminium cristallin composite selon l'une quelconque des revendications 1—3, qui a été préparé à partir d'un mélange aqueux composé en ajoutant à de l'eau de la silice amorphe, de l'aluminate de sodium, de l'hydroxyde de sodium, de la pyridine et du sulfate de sodium ou du nitrate de sodium.

6. Silicate d'aluminium cristallin composite selon l'une quelconque des revendications 1—5, dans lequel la teneur en métal alcalin a été réduite à moins de 0,1% en poids.

7. Un procédé pour le déparaffinage catalytique d'huiles d'hydrocarbures, dans lequel le catalyseur utilisé est un silicate d'aluminium cristallin composite selon l'une quelconque des revendications 1—6.

8. Un procédé selon la revendication 7, dans lequel l'huile d'hydrocarbures à déparaffiner a été choisie

dans le groupe formé par les huiles lubrifiantes, les huiles pour transformateurs, les kérosènes et les gasoils.

9. Un procédé selon la revendication 7 ou 8, dans lequel pas plus de 10% en poids de cire n'est enlevée de l'huile d'hydrocarbures à déparaffiner.

10. Un procédé selon l'une quelconque des revendications 7—9, qui est utilisé sur une huile d'hydrocarbures de laquelle une partie de la cire a déjà été enlevée par déparaffinage au solvant.

11. Une procédé selon l'une quelconque des revendications 7—10, qui est mis en oeuvre à une température comprise entre 250 et 500°C, une pression d'hydrogène comprise entre 5 et 100 bars, une vitesse spatiale comprise entre 0,1 et 5,0 $kg.1^{-1}.h^{-1}$ et un rapport hydrogène/huile compris entre 100 et 2500 $N1.kg^{-1}$.

12. Un procédé selon la revendication 11, qui est mis en oeuvre à une température comprise entre 275 et 450°C, une pression d'hydrogène comprise entre 10 et 75 bars, une vitesse spatiale comprise entre 0,3 et 3 $kg.1^{-1}.h^{-1}$ et un rapport hydrogène/huile compris entre 200 et 2500 $N1.kg^{-1}$.

13. Huiles d'hydrocarbures qui ont été déparaffinées par un procédé selon la revendication 7.

**Patentansprüche**

1. Zusammengesetztes kristallines Aluminiumsilikat, das hergestellt wurde durch Verwendung einer wäßrigen Mischung als Ausgangsmischung, enthaltend eine oder mehrere Siliciumverbindung(en), eine oder mehrere Aluminiumverbindungen, ein oder mehrere Alkalimetallhydroxid(e) (MOH), und ein oder mehrere Alkalimetallsalz(e) ($M_nX$) der Mineralsäuren und ein Pyridin (RN), in welcher Mischung die verschiedenen Komponenten in den folgenden molaren Verhältnissen vorliegen:

$SiO_2$ : MOH 5,2—7,8,
$SiO_2 : M_nX < 10$,
$SiO_2 : Al_2O_3$ = 60—250,
$SiO_2$ : RN = 2,2—2,8, und
$H_2O : SiO_2$ = 5—65,

Aufrechterhalten der Mischung ohne Einsatz mechanischer Energie bei einer Temperatur zwischen 100 und 200°C bis zur Bildung des kristallinen Silikats und anschließend Trennen des Silikats von der Mutterlauge.

2. Zusammengesetztes kristallines Aluminiumsilikat wie in Anspruch 1 beansprucht, das hergestellt wurde durch Verwendung einer wäßrigen Mischung als Ausgangsmischung, in welcher die verschiedenen Komponenten in the folgenden molaren Verhältnissen vorliegen.

$SiO_2$ : MOH = 5,6—7,0,
$SiO_2 : M_nX < 8$,
$SiO_2 : Al_2O_3$ = 80—200,
$SiO_2$ : RN = 2,2—2,8, und
$H_2O : SiO_2$ = 8—50.

3. Zusammengesetztes kristallines Aluminiumsilikat wie in Anspruch 1 oder 2 beansprucht, das hergestellt wurde durch Verwendung einer wäßrigen Mischung als Ausgangsmischung enthaltend Natriumhydroxid als Alkalimetallhydroxid und ein Natriumsalz als Alkalimetallsalz einer Mineralsäure.

4. Zusammengesetztes kristallines Aluminiumsilikat wie in irgendeinem der Ansprüche 1 bis 3 beansprucht, das hergestellt wurde durch Verwendung einer wäßrigen Mischung als Ausgangsmischung, welche gebildet wurde durch Zugeben von Wasserglas, Aluminiumsulfat, Schwelfelsäure und Pyridin zu Wasser.

5. Zusammengesetztes kristallines Aluminiumsilikat wie in irgendeinem der Ansprüche 1 bis 3 beansprucht, welches hergestellt wurde durch Verwendung einer wäßrigen Mischung als Ausgangsmischung, die gebildet wurde durch Zugeben von amorphem Siliciumdioxid, Natriumaluminat, Natriumhydroxid, Pyridin und entweder Natriumsulfat oder Natriumnitrat zu Wasser.

6. Zusammengesetztes kristallines Aluminiumsilikat wie in irgendeinem der Ansprüche 1 bis 5 beansprucht, in welchem der Anteil an Alkalimetall auf weniger als 0,1 Gewichtsprozent reduziert worden ist.

7. Ein Verfahren zum katalytischen Entparaffinieren von Kohlenwasserstoffölen, in welchem der verwendete Katalysator ein zusammengesetztes kristallines Aluminiumsilikat, wie in irgendeinem der Ansprüche 1 bis 6 beansprucht, ist.

8. Ein Verfahren wie in Anspruch 7 beansprucht, in welchem das zu entparaffinierende Kohlenwasserstofföl ausgewählt wurde aus der Gruppe bestehend aus Schmierölen, Transformatorenölen, Kerosinen und Gasölen.

9. Ein Verfahren wie in Anspruch 7 oder 8 beansprucht, in welchem nicht mehr als 10 Gewichtsprozent des Paraffins aus dem zu entparaffinierenden Kohlenwasserstofföl entfernt werden.

10. Ein Verfahren wie in irgendeinem der Ansprüche 7 bis 9 beansprucht, welches auf ein Kohlenwasserstofföl, von welchem ein Teil des Paraffins bereits durch Lösungsmittelentparaffinierung entfernt worden war angewendet wird.

11. Ein Verfahren wie in irgendeinem der Ansprüche 7 bis 10 beansprucht, welches bei einer Temperatur von 250 bis 500°C, einem Wasserstoffdruck von 5 bis 100 bar, einer Raumgeschwindigkeit von 0,1 bis 5,0 $kg.1^{-1}.h^{-1}$ und einem Wasserstoff/Öl-Verhältnis von 100 bis 2500 $N1.kg^{-1}$ durchgeführt wird.

12. Ein Verfahren wie in Anspruch 11 beansprucht, welches bei einer Temperatur von 275 bis 450°C, einem Wasserstoffdruck von 10 bis 75 bar, einer Raumgeschwindigkeit von 0,3 bis 3 $kg.1^{-1}.h^{-1}$ und einem Wasserstoff/Öl-Verhältnis von 200—2500 $N1.kg^{-1}$ durchgeführt wird.

13. Kohlenwasserstofföle, welche gemäß einem Verfahren wie in Anspruch 7 beansprucht entparaffiniert worden sind.